# EUROPÄISCHE PATENTSCHRIFT

(11) **EP 2 508 494 B1**
(45) Veröffentlichungstag und Bekanntmachung des Hinweises auf die Patenterteilung: **26.11.2014**
(21) Anmeldenummer: 12162856.4
(22) Anmeldetag: 02.04.2012
(51) Int. Cl.: C04B 7/36, C04B 7/44, F27B 7/20, F27D 17/00

(54) **Verfahren und Anlage zur Herstellung von Zementklinker**
Method and device for manufacturing cement clinker
Procédé et installation destinés à la fabrication de clinker de ciment

(30) Priorität: 04.04.2011 DE 102011001773
(43) Veröffentlichungstag der Anmeldung: 10.10.2012
(73) Patentinhaber: ThyssenKrupp Industrial Solutions AG, 45143 Essen (DE)
(72) Erfinder: Stender, Timo, 44137 Dortmund (DE); Dinkova, Anna, 44263 Dortmund (DE)
(74) Vertreter: Tetzner, Michael

(56) Entgegenhaltungen:
- EP-A1- 0 461 305
- WO-A1-94/29231
- WO-A1-2010/124702
- DE-A1- 19 756 392
- DE-C1- 4 313 479
- JP-A- 2000 130 742
- US-A1- 2005 274 067
- SIKALIDIS C A ET AL: "Utilisation of municipal solid wastes for mortar production", RESOURCES CONSERVATION AND RECYCLING, ELSEVIER SCIENCE PUBLISHER, AMSTERDAM, NL, Bd. 36, Nr. 2, 1. August 2002 (2002-08-01) , Seiten 155-167, XP004372117, ISSN: 0921-3449, DOI: 10.1016/S0921-3449(02)00018-6

## Beschreibung

Die Erfindung betrifft ein Verfahren und eine Anlage zur Herstellung von Zementklinker durch Vorwärmen und Calcinieren von Zementrohmehl in einer thermischen Behandlungseinrichtung, wobei die bei der Klinkerherstellung entstehenden Abgase zur Vorwärmung genutzt werden.

Das Brennen von Zementklinker erfolgt heute fast ausschließlich in Drehrohrofenanlagen bei Temperaturen um 1.450 °C. Die nötige Energie zum Brennen wird üblicherweise durch die Verbrennung von Regelbrennstoffen, wie Kohle, im Hauptbrenner bereitgestellt. Aus Kostengründen werden die Regelbrennstoffe in der Praxis zunehmend durch Ersatzbrennstoffe substituiert. Der Einsatz von Ersatzbrennstoffen führt aber zu einer Veränderung der Flammenform und der Temperaturverteilung im Ofen und dadurch zu einem höheren Energiebedarf, der entsprechend höhere Abgastemperaturen zur Folge hat.

Das Zementrohmehl wird in einem meist als Gegenstrom-Zyklonwärmetauscher ausgebildeten Wärmetauscher mit dem Ofenabgas vor dem Eintritt in den Ofen aufgeheizt und entsäuert. Im Wärmetauscherturm befindet sich vor dem Ofeneinlauf i.d.R. ein Calcinator. Neben dem Hauptbrenner erfolgt im Calcinator bzw. am Ofeneinlauf eine Brennstoffaufgabe, wodurch eine hohe Entsäuerungsrate erreicht, der Volumenstrom im Ofen reduziert und die Klinkerproduktion erhöht wird. Als Brennstoff können im Calcinator unter anderem auch biologische Abfälle, wie Klärschlamm, eingesetzt werden.

Der Klärschlamm der kommunalen Abwasserreinigung hat typischerweise nach der mechanischen Entwässerung Wassergehalte von etwa 70 Gew.%. Der Eintrag von Schlämmen mit hohen Feuchten und entsprechend geringen Heizwerten hätte jedoch keinen signifikanten Beitrag an der Calcinierung/Entsäuerung. Vielmehr kann der Eintrag von Klärschlamm mit hoher Feuchte als Entsorgung des Klärschlamms angesehen werden. Bei den hohen Temperaturen im Calcinator werden Geruchsstoffe, wie Kohlenstoff- und Ammoniak-Verbindungen, zersetzt. Der Eintrag führt jedoch zu einem steigenden Abgasvolumenstrom, der eine größere Dimensionierung des Vorwärmers erfordert oder bei bestehenden Anlagen die Produktion einschränkt.

Daher ist es vorteilhaft den Klärschlamm vor der Zugabe zu trocknen. Die beim Trocknen entstehenden Abgase (Dampf oder Luft) sind mit kohlenstoff- und ammoniakhaltigen Geruchsstoffen belastet, wobei die Aufbereitung der belasteten Abgase oder des Brüdenkondensats (nach Kondensation des Brüdendampfs) mit Wäschern und/oder Biofiltern erfolgen kann. Hierdurch erhöht sich der Anlagenaufwand jedoch signifikant. In der WO-2010-124702 wird daher vorgeschlagen, das anfallende Abgas in den Klinkerkühler zu führen, wodurch allerdings eine Reduzierung der Kühlerleistung in Kauf genommen werden muss. Die US-2005-0274067 beschreibt die Zuführung in den Zementherstellungsprozess, wobei die Zuführung in den Calcinator oder den Ofen jedoch zu einer geringeren Klinkerproduktion führt.

In der EP 1 930 303 A1 wird Rohbiogas als Brennstoff bei der Zementherstellung eingesetzt, wobei das Rohbiogas signifikante Mengen Ammoniak enthält, die als Reduktionsmittel gegenüber den Stickoxiden fungieren.

Der Erfindung liegt daher die Aufgabe zugrunde, das Verfahren bzw. die Anlage zur Herstellung von Zementklinker unter Einsatz von Sekundärbrennstoffen mit hohen Feuchten zu verbessern, ohne dass eine aufwändige Reinigung des überschüssigen Abgases aus dem Trockner erforderlich ist und ohne dass die Klinkerproduktion eingeschränkt wird.

Diese Aufgabe wird durch die Merkmale der Ansprüche 1 und 7 gelöst.

Beim erfindungsgemäßen Verfahren zur Herstellung von Zementklinker durch Vorwärmen von Zementrohmehl in einem Vorwärmer und Calcinieren und Sintern des vorgewärmten Zementrohmehl, wobei die bei der Calcination und beim Sinterprozess entstehenden Abgase zur Vorwärmung genutzt und anschließend in einem SCR-Katalysator gereinigt. Bei der Calcination kommen kohlenstoffhaltige Geruchsstoffe und/oder ammoniakhaltige Verbindungen enthaltende Ersatzbrennstoffe zum Einsatz, die zuvor getrocknet werden, wobei ein bei der Trocknung entstehendes Trocknungsabgas und/oder Brüdenkondensat zumindest teilweise zur Abgasquenche vor dem SCR-Katalysator genutzt wird und die kohlenstoffhaltigen Geruchsstoffe und/oder ammoniakhaltigen Verbindungen im Trocknungsabgas und/oder Brüdenkondensat am SCR-Katalysator umgesetzt werden, wobei der SCR-Katalysator Stickoxide reduziert und Kohlenwasserstoffe oxidiert.

Die erfindungsgemäße Anlage zur Herstellung von Zementklinker gemäß dem obigen Verfahren besteht im Wesentlichen aus
- einem Ersatzbrennstoff Trockner zum Trocknen von kohlenstoffhaltigen Geruchsstoffen und/oder ammoniakhaltigen Verbindungen enthaltenden Ersatzbrennstoffen mit einem ersten Ausgang für den getrockneten Ersatzbrennstoff und einem zweiten Ausgang für ein bei der Trocknung entstehendes Trocknungsabgas und/oder ein Brüdenkondensat,
- einer thermischen Behandlungseinrichtung zum Vorwärmen und Calcinieren des Zementrohmehls, die mit dem ersten Ausgang des Ersatzbrennstoff-Trockners zum Zwecke der Zuführung des getrockneten Ersatzbrennstoffs in Verbindung steht und wobei die bei der Klinkerherstellung entstehenden Abgase zur Vorwärmung genutzt werden, und
- einem SCR-Katalysator zum Reinigen der im Vorwärmer genutzten Abgase, wobei der zweite Ausgang des Ersatzbrennstoff-Trockners zum Zwecke der Abgasquenche mit einem das Abgas zum SCR-Katalysator leitenden Verbindungsbereich in Verbindung steht.

Die hohen Temperaturen beim Brennen vom Zementklinker erzeugen hohe Konzentrationen an Stickoxiden in der Größenordnung von 1.200 mg/Nm³ bei 10% O₂. Die NOₓ-Minderung erfolgt durch Zugabe von NH₃-haltigen Reduktionsmitteln. Die 17. BImSchV regelt die NOₓ-Emissionen bei der Mitverbrennung von Abfällen für Anlagen zur Herstellung von Zementklinker, wobei abhängig vom Ersatzbrennstoff-Anteil an der Feuerungswärmeleistung ein NOₓ-Grenzwert zwischen 500 und 200 mg/Nm³ bei 10% O₂ gilt. Grenzwerte im unteren Bereich dieser Spanne können i.d.R. nicht mit der konventionellen Entstickung mittels SNCR erreicht werden.

Daher ist der Einsatz der SCR, der katalytischen Entstickung erforderlich. Bevorzugt wird der SCR-Katalysator hierbei direkt nach dem Vorwärmer im Abgasstrang integriert, da hier prozessbedingt ein sinnvoller Temperaturbereich für die katalytische Entstickung vorhanden ist.

Das Abgas wird nach dem Vorwärmer noch zum Trocknen von Rohmaterialien eingesetzt. Danach ist der Temperaturbereich jedoch für die katalytische Entstickung zu gering. Durch die SO₂-Fracht im Abgas würde es zudem zu einer Ausfällung von Ammoniumsulfaten am SCR-Katalysator kommen, was die Deaktivierung der aktiven Katalysatorzentren zur Folge hätte. Ein aufwändiges Wärmeverschiebe-System und eine zusätzliche Energiezufuhr wären daher erforderlich.

Der SCR-Katalysator ist üblicherweise als Waben- oder Plattenkatalysator mit sehr kleinen Öffnungen von etwa 10 mm ausgebildet. Die nach dem Vorwärmer vorliegenden sehr hohen Staubbeladungen um 70 g/Nm³ können daher zu einer Verstopfung der Kanäle führen. Bei höheren Abgastemperaturen, insbesondere größer 400 °C, wie sie häufig als Folge der Verbrennung von hohen Sekundärbrennstoffraten nach dem Vorwärmer vorliegen, ergibt sich eine höhere Zähigkeit der Stäube gegenüber den Staubeigenschaften bei geringeren Temperaturen von beispielsweise 350 °C, die beim Einsatz von Regelbrennstoffen entstehen. Entsprechend reduziert sich die Fließfähigkeit und die Gefahr der Verstopfung steigt an.

Durch die Nutzung des bei der Trocknung entstehendes Trocknungsabgases und/oder Brüdenkondensats zur Abgasquenche vor dem SCR-Katalysator kann die Verstopfungsgefahr im SCR-Katalysator reduziert werden. Außerdem hat die Zuführung des Trocknungsabgases und/oder Brüdenkondensats den Vorteil, dass enthaltende kohlenstoffhaltige Geruchsstoffe am SCR-Katalysator mit Sauerstoff oxidiert werden und enthaltendes Ammoniak die Stickoxide reduziert, so dass die Menge des zugeführten Ammoniakwassers zur NOₓ-Reduktion entsprechend gesenkt werden kann.

Weitere Ausgestaltungen der Erfindung sind Gegenstand der Unteransprüche.

Als Ersatzbrennstoffe können bei der kommunalen oder industriellen Abwasserbehandlung anfallende, mechanisch oder thermisch behandelte Schlämme, sonstige Industrieschlämme oder biologische Abfallprodukte zur Anwendung kommen. Der Sekundärbrennstoff wird in einem beispielsweise als Konvektions- und/oder Kontakttrockner ausgebildeten Ersatzbrennstoff-Trockner auf einen Feuchtgehalt von vorzugsweise kleiner 15% reduziert, bevor er in der thermischen Behandlungseinrichtung, insbesondere in einem Calcinator oder im Ofen als Brennstoff aufgegeben wird.

Das Abgas oder das Brüdenkondensat aus dem Ersatzbrennstoff-Trockner wird vor dem SCR-Katalysator zugeführt, um die Vorwärmerabgase vor dem SCR-Katalysator auf Temperaturen zwischen 280 und 400 °C und bevorzugt auf Temperaturen zwischen 330 und 370 °C abzusenken und hierdurch die Verstopfungsgefahr des SCR-Katalysators zu reduzieren. Bevorzugt erfolgt das Quenchen in der obersten Zyklonstufe eines mehrere, übereinander angeordnete Zyklonstufen aufweisenden Vorwärmers mit Brüdenkondensat aus dem Ersatzbrennstoff-Trockner, da hiermit die höchste Kühlleistung erreicht wird.

Am SCR-Katalysator erfolgt neben einer Umsetzung von NOₓ mit NH₃, das als Reduktionslösung zugeführt wird, zu N₂ auch eine simultane Umsetzung (Oxidation) von Kohlenwasserstoffen. Durch die Kombination der Abgas- oder Brüdenentsorgung mit der Abgasquenche ist somit keine zusätzliche aufwändige Reinigung der anfallenden Abgasströme des Trockners erforderlich und der Bedarf an Frischwasser und/oder Kühlgas zur Abgasquenche kann gesenkt werden.

Die nötige Energie für die Klärschlammtrocknung wird vorzugsweise indirekt durch Wärmeübertragung bereitgestellt. Hierfür könnte die zur Trocknung der Ersatzbrennstoffe erforderliche Energie aus dem Zementprozess ausgekoppelt werden. Bevorzugt wird der ausgekoppelte Anteil nach der Nutzung wieder in den jeweiligen Abgasstrang zurückgeführt. Die erforderliche Wärme zur Trocknung kann dabei beispielsweise ganz oder teilweise nach dem SCR-Katalysator, dem Vorwärmer, dem Ofeneinlaufsbereich oder dem Kühlprozess entnommen werden. Auch eine Mischung von unterschiedlichen Energiequellen zur Trocknung ist denkbar.

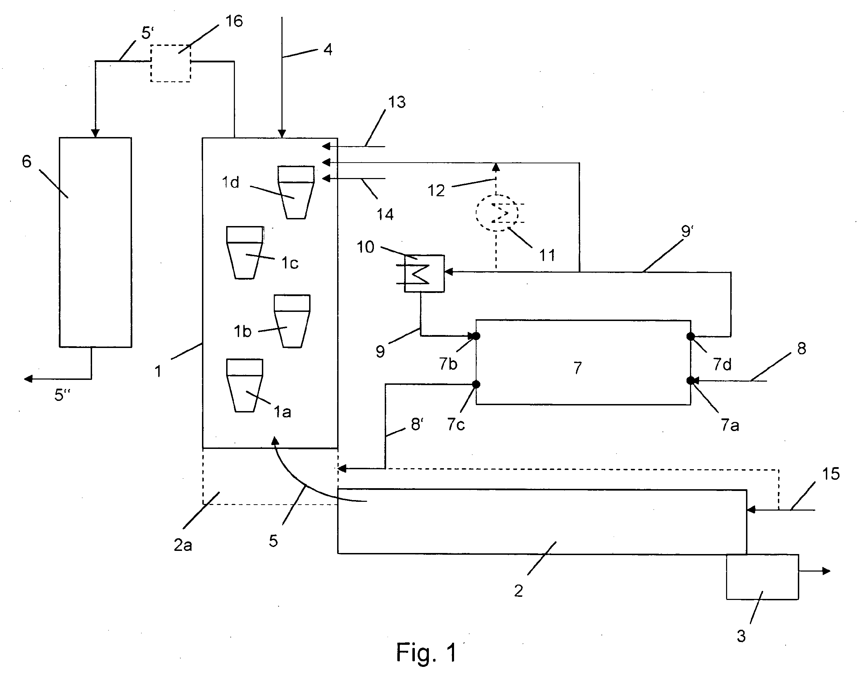

Weitere Vorteile und Ausgestaltungen der Erfindung werden im Folgenden anhand der Beschreibung und der Zeichnung näher erläutert.

Die Zeichnung zeigt eine schematische Prinzipdarstellung einer erfindungsgemäßen Anlage zur Herstellung von Zementklinker.

Die Anlage weist eine thermische Behandlungseinrichtung auf, die im dargestellten Ausführungsbeispiel einen Vorwärmer 1, einen Ofen 2 und einen Kühler 3 umfasst. Der Vorwärmer 1 ist als Schwebegaswärmetauscher mit mehreren, übereinander angeordneten Zyklonstufen 1a bis 1d ausgebildet, wobei Zementrohmehl 4 im Gegenstrom zu bei der Klinkerherstellung und der Calcination entstehenden Abgasen 5 vorgewärmt wird. Weiterhin ist zwischen Vorwärmer 1 und Ofen 2 ein optionaler Calcinator 2a zur Calcination des vorgewärmten Zementrohmehls angeordnet.

Das im Ofen 2 zu Zementklinker gebrannte Zementrohmehl wird anschließend im Kühler 3 abgekühlt.

Das den Vorwärmer 1 verlassende Abgas 5' wird nachfolgend in einem SCR-Katalysator 6 gereinigt, wobei das gereinigte Abgas 5" in einer nicht dargestellten Trocknungsmahlanlage genutzt oder direkt einem Prozessfilter zugeführt wird. Zwischen Vorwärmer 1 und SCR-Katalysator 6 kann ggf. ein Elektrofilter 16 zur Vorentstaubung eingesetzt werden.

Um wenigstens einen Teil des für die Calcination erforderlichen Brennstoffs bereitzustellen, ist weiterhin ein Ersatzbrennstoff-Trockner 7 vorgesehen, mit dem Ersatzbrennstoffe 8, die beispielsweise bei der kommunalen oder industriellen Abwasserbehandlung anfallende, mechanisch oder thermisch behandelte Schlämme, sonstige Industrieschlämme oder biologische Abfallprodukte, getrocknet werden können. Vorzugsweise werden die Ersatzbrennstoffe auf eine Feuchte < 15% getrocknet. Der Ersatzbrennstoff-Trockner 7 weist einen ersten Eingang 7a für zu trocknenden Ersatzbrennstoff 8, einen zweiten Eingang 7b zur Zuführung eines Trocknungsgases 9, einen ersten Ausgang 7c für den getrockneten Brennstoff 8' und einen zweiten Ausgang 7d für bei der Trocknung entstehende Trocknungsabgase 9'. Der Ersatzbrennstoff-Trockner 7 wird beispielsweise durch einen Kontakttrockner, bei dem die Wärme durch den Kontakt zwischen feuchtem Produkt und einer beheizten Wand zugeführt wird oder einen Konvektionstrockner, bei welchem die erforderliche thermische Energie durch einen Gasstrom zugeführt wird, gebildet.

Im dargestellten Ausführungsbeispiel wird ein Teil des Trocknungsabgases 9' rezirkuliert und vor dem wiederholten Eintritt in den Ersatzbrennstoff-Trockner 7 in einem Wärmetauscher 10 indirekt erhitzt. Die hierfür erforderliche Energie wird vorzugsweise aus dem Zementprozess ausgekoppelt, wobei insbesondere das gereinigte Abgas 5", das Abgas 5' aus dem Vorwärmer 1, das Abgas 5 aus dem Ofeneinlassbereich oder das Abgas des Kühlers 3 genutzt werden kann. Auch eine Mischung von unterschiedlichen Energiequellen zur Trocknung ist denkbar. Zweckmäßigerweise wird der ausgekoppelte Anteil nach der Nutzung im Wärmetauscher 10 wieder in den jeweiligen Abgasstrang zurückgeführt.

Der andere Teil des Trocknungsabgases 9' wird zum Zwecke der Abgasquenche in einen zum SCR-Katalysator leitenden Verbindungsbereich eingeführt. Besonders geeignet ist hierbei die oberste Zyklonstufe 1d des Vorwärmers 1. Liegt das Trocknerabgas 9' als Brüdendampf vor, wird dieser zunächst einem Kondensator 11 zugeführt, wobei das dabei entstehende Brüdenkondensat 12 zum Zwecke der Abgasquenche in den zum SCR-Katalysator leitenden Verbindungsbereich eingeführt wird. Es wäre aber auch denkbar, das Trocknungsabgas bzw. das Brüdenkondensat 12 in eine den Vorwärmer 1 mit dem SCR-Katalysator 6 verbindende Abgasleitung eingeführt wird. Je nach Bedarf kann es erforderlich sein, dass zur Abgasquenche neben dem abgezogenen Trocknerabgas 9' oder dem Brüdenkondensat 12 zusätzlich Frischwasser oder Kühlgas 13 vor dem SCR-Katalysator 6 zugeführt wird.

Weiterhin kann in diesem Bereich ammoniakhaltiges Reduktionsmittel 14 zur Reduktion von Stickoxiden zugeführt werden. Das ammoniakhaltige Reduktionsmittel kann durch die ammoniakhaltigen Verbindungen im Trocknerabgas 9' oder im Brüdenkondesat 12 teilweise reduziert werden.

Der Ofen wird mit Brennstoff 15 betrieben, der ganz oder teilweise durch den getrockneten Brennstoff 8' ersetzt werden kann. Der im Ersatzbrennstoff-Trockner 7 getrocknete Brennstoff 8' kann außerdem dem Vorwärmer 1, dem Einlaufbereich des Ofens 2 und/oder dem Calcinator 2a zugeführt werden.

## Patentansprüche

1. Verfahren zur Herstellung von Zementklinker durch Vorwärmen von Zementrohmehl (4) in einem Vorwärmer und Calcinieren und Sintern des vorgewärmten Zementrohmehl (4), wobei die bei der Calcination und beim Sinterprozess entstehenden Abgase (5) zur Vorwärmung genutzt und anschließend in einem SCR-Katalysator (6) gereinigt werden und bei der Calcination und dem Sinterprozess kohlenstoffhaltige Geruchsstoffe und/oder ammoniakhaltige Verbindungen enthaltende Ersatzbrennstoffe (8) zum Einsatz kommen, die zuvor getrocknet werden, wobei ein bei der Trocknung entstehendes Trocknungsabgas (9') und/oder Brüdenkondensat (12) zumindest teilweise zur Abgasquenche vor dem SCR-Katalysator (6) genutzt wird und die kohlenstoffhaltigen Geruchsstoffe und/oder ammoniakhaltigen Verbindungen im Trocknungsabgas und/oder Brüdenkondensat (12) am SCR-Katalysator (6) umgesetzt werden, wobei der SCR-Katalysator (6) Stickoxide reduziert und Kohlenwasserstoffe oxidiert.

2. Verfahren nach Anspruch 1 wobei die Ersatzbrennstoffe (8) auf eine Feuchte kleiner 15% getrocknet werden.

3. Verfahren nach Anspruch 1, wobei die Abgastemperatur vor dem SCR-Katalysator (6) durch die Abgasquenche auf eine Temperatur zwischen 280 und 400 C gesenkt wird.

4. Verfahren nach Anspruch 1, wobei zur Abgasquenche neben dem abgezogenen Trocknerabgas (9') oder dem Brüdenkondesat (12) zusätzlich Frischwasser oder Kühlgas (13) zugeführt wird.

5. Verfahren nach Anspruch 1, wobei die erforderliche Energie zur Trocknung der Ersatzbrennstoffe (8) aus dem Zementprozess ausgekoppelt wird.

6. Verfahren nach wenigstens einem der vorherigen Ansprüche, wobei die erforderliche Energie zur Trocknung der Ersatzbrennstoffe (8) indirekt übertragen wird.

7. Anlage zur Herstellung von Zementklinker gemäß einem Verfahren nach einem oder mehreren der vorhergehenden Ansprüche mit
- einem Ersatzbrennstoff-Trockner (7) zum Trocknen von kohlenstoffhaltigen Geruchsstoffen und/oder ammoniakhaltige Verbindungen enthaltenden Ersatzbrennstoffen (8) mit einem ersten Ausgang (7c) für den getrockneten Ersatzbrennstoff (8') und einem zweiten Ausgang (7d) für bei der Trocknung entstehender Trocknungsabgase (9') und/oder ein Brüdenkondensat,
- einer thermischen Behandlungseinrichtung zum Vorwärmen und Calcinieren des Zementrohmehls, die mit dem ersten Ausgang (7c) des Ersatzbrennstoff-Trockners (7) zum Zwecke der Zuführung des getrockneten Ersatzbrennstoffs (8') in Verbindung steht und wobei die bei der Calcination entstehenden Abgase (5) zur Vorwärmung genutzt werden, und
- einem SCR-Katalysator (6) zum Reinigen der im Vorwärmer (1) genutzten Abgase (5'), wobei der zweite Ausgang (7d) des Ersatzbrennstoff-Trockners (7) zum Zwecke der Abgasquenche mit einem das im Vorwärmer (1) genutzte Abgas (5') zum SCR-Katalysator (6) leitenden Verbindungsbereich in Verbindung steht.

8. Anlage nach Anspruch 7, wobei der Ersatzbrennstoff-Trockner (7) einen Konvektions- und/oder einen Kontakttrockner zur Wärmeübertragung umfasst.

9. Anlage nach Anspruch 7, wobei der Vorwärmer (1) mehrere, übereinander angeordnete Zyklonstufen (1a-1d) aufweist und der zweite Ausgang (7d) des Ersatzbrennstoff-Trockners an die oberste Zyklonstufe (1d) angeschlossen ist.

## Claims

1. Method for producing cement clinker by preheating cement raw meal (4) in a preheater and calcining and sintering the preheated cement raw meal (4), the exhaust gases (5) which are produced during the calcination and the sintering process being used for preheating and subsequently being cleaned in an SCR catalytic convertor (6), and there being used during the calcination and sintering process replacement fuels (8) which contain carbon-containing odorous substances and/or ammonia-containing compounds and which are previously dried, a drying exhaust gas (9') which is produced during the drying operation and/or exhaust vapour condensate (12) being used at least partially for exhaust gas quenching upstream of the SCR catalytic convertor (6), and the carbon-containing odorous substances and/or ammonia-containing compounds being converted in the drying exhaust gas and/or exhaust vapour condensate (12) on the SCR catalytic convertor (6), wherein the SCR catalytic convertor (6) is reducing nitrogen oxides and oxidising hydrocarbons.

2. Method according to claim 1, the replacement fuels (8) being dried to a moisture level of less than 15%.

3. Method according to claim 1, the exhaust gas temperature upstream of the SCR catalytic convertor (6) being reduced by the exhaust gas quenching to a temperature of between 280 and 400°C.

4. Method according to claim 1, fresh water or cooling gas (13) additionally being supplied for exhaust gas quenching in addition to the drawn-off dryer exhaust gas (9').

5. Method according to claim 1, the energy required for drying the replacement fuels (8) being decoupled from the cement process.

6. Method according to at least one of the preceding claims, the energy required for drying the replacement fuels (8) being indirectly transferred.

7. Installation for producing cement clinker in accordance with a method according to one or more of the preceding claims, having:
- a replacement fuel dryer (7) for drying replacement fuels (8) which contain carbon-containing odorous substances and/or ammonia-containing compounds having a first output (7c) for the dried replacement fuel (8') and a second output (7d) for drying exhaust gases (9') which are produced during the drying operation and/or an exhaust vapour condensate,
- a thermal processing device for preheating and calcining the cement raw meal, which is connected to the first output (7c) of the replacement fuel dryer (7) in order to supply the dried replacement fuel (8') and the exhaust gases (5) which are produced during the calcination being used for preheating, and
- an SCR catalytic convertor (6) for cleaning the exhaust gases (5') used in the preheater (1), the second output (7d) of the replacement fuel dryer (7) being connected for the purposes of exhaust gas quenching to a connection region which directs the exhaust gas 5' used in the preheater (1) to the SCR catalytic convertor (6).

8. Installation according to claim 7, the replacement fuel dryer (7) comprising a convection and/or a contact dryer for heat transfer.

9. Installation according to claim 7, the preheater (1) having a plurality of cyclone stages (1a-1d) which are arranged one above the other, and the second output (7d) of the replacement fuel dryer being connected to the uppermost cyclone stage (1d).

## Revendications

1. Procédé de fabrication de clinker de ciment, par préchauffage de farine de ciment crue (4) dans un dispositif de préchauffage et calcination et frittage de la farine de ciment crue (4), les gaz d'échappement (5), générés lors de la calcination et lors du frittage, étant utilisés pour le préchauffage et purifiés ensuite dans un catalyseur SCR (6), et des substances odorantes carbonées et / ou des combustibles de remplacement (8) préalablement séchés, contenant des composés ammoniacaux, étant utilisés lors de la calcination et du frittage, sachant qu'un gaz d'échappement de séchage (9'), généré lors du séchage, et / ou du condensat de vapeur (12) sont utilisés, au moins partiellement, pour la désactivation des gaz d'échappement en amont du catalyseur SCR (6), et que les substances odorantes carbonées et / ou les composés ammoniacaux dans les gaz d'échappement de séchage et ou le condensat de vapeur (12) sont convertis par le catalyseur SCR (6), sachant que le catalyseur SCR (6) réduit les oxydes d'azote et qu'il oxyde les carbures d'hydrogène.

2. Procédé selon la revendication 1, sachant que les combustibles de remplacement (8) sont séchés à un degré d'humidité inférieur à 15 %.

3. Procédé selon la revendication 1, sachant que **la** température des gaz d'échappement en amont du catalyseur SCR (6) est abaissée entre 280 et 400°C par la désactivation.

4. Procédé selon la revendication 1, sachant que de l'eau fraîche ou du gaz de refroidissement (13) est utilisé à côté des gaz d'échappement de séchage (9') ou du condensat de vapeur (12) pour désactiver les gaz d'échappement.

5. Procédé selon la revendication 1, sachant que l'énergie nécessaire au séchage des combustibles de remplacement (8) est découplée du processus de cimenterie.

6. Procédé selon au moins l'une des revendications précédentes, sachant que l'énergie nécessaire au séchage des combustibles de substitution (8) est transmise indirectement.

7. Installation destinée à la fabrication de clinker de ciment conformément à un procédé selon l'une ou plusieurs des revendications précédentes, qui comprend
- un sécheur (7) pour le séchage de combustibles de remplacement (8) contenant des substances odorantes carbonées et / ou des composés ammoniacaux, lequel sécheur est doté d'une première sortie (7c) pour le combustible de remplacement séché (8') et d'une deuxième sortie (7d) pour les gaz d'échappement (9'), générés lors du séchage, et / ou pour le condensat de vapeur,
- une installation de traitement thermique pour le préchauffage et la calcination de la farine de ciment crue, laquelle installation est reliée à la première sortie (7c) du sécheur de combustibles de remplacement (7) pour l'alimentation en combustibles de remplacement séchés (8'), et sachant que les gaz d'échappement (5), générés lors de la calcination, sont utilisés pour le préchauffage,
- un catalyseur SCR (6) pour la purification des gaz d'échappement (5') utilisés dans le dispositif de préchauffage (1), sachant que, pour la désactivation des gaz d'échappement, la deuxième sortie (7d) du sécheur de combustibles de remplacement (7) est reliée à une zone de communication qui conduit, au catalyseur SCR (6), les gaz d'échappement (5') utilisés dans le dispositif de préchauffage (1).

8. Installation selon la revendication 7, sachant que le sécheur de combustibles de remplacement (7) est doté d'un sécheur à convection et / ou d'un dispositif de séchage par contact pour le transfert thermique.

9. Installation selon la revendication 7, sachant que dispositif de préchauffage (1) est doté de plusieurs étages de cyclone (1a - 1d) superposées et que la deuxième sortie (7d du sécheur de combustibles de remplacement est raccordée à l'étage de cyclone le plus élevée (1d).
